# EUROPEAN PATENT SPECIFICATION

(11) **EP 3 302 827 B1**
(45) Date of publication and mention of the grant of the patent: **17.11.2021**
(21) Application number: 16734448.0
(22) Date of filing: 24.05.2016
(51) Int. Cl.: B07B 1/14, B07B 13/07, A01D 17/06

(54) **APPARATUS FOR SELECTING HORTICULTURAL PRODUCTS**
VORRICHTUNG ZUR AUSWAHL VON GARTENBAUPRODUKTEN
APPAREIL DE SÉLECTION DE PRODUITS HORTICOLES

(30) Priority: 28.05.2015 IT UB20151233
(43) Date of publication of application: 11.04.2018
(73) Proprietor: Unitec S.p.A., 48022 Lugo (IT)
(72) Inventor: BENEDETTI, Luca, 48123 Ravenna (IT)
(74) Representative: Modiano, Micaela Nadia
(86) International application number: PCT/IB2016/053032
(87) International publication number: WO 2016/189459

(56) References cited:
- EP-A1- 0 704 253
- US-A- 3 770 123
- US-A1- 2012 298 565

## Description

The present invention relates to an apparatus for selecting horticultural products.

The document US-A1-2012/0298565 discloses an apparatus for selecting horticultural products in accordance with the preamble of claim 1.

As is known, large companies dedicated to the distribution and marketing of horticultural products are often equipped with lines that are at least partially automated and are capable of transporting, checking and/or packaging a large number of products of interest in the unit time.

Known lines are therefore already capable of performing several activities, such as for example washing, defect checking (and/or rejection or reprocessing of defective units), packaging and calibration, a term used to reference the selection of the horticultural products as a function of their dimensions.

It should be noted in this regard that calibration has a primary role in the automatic lines outlined so far, since even when they are intended for a single specific horticultural product (be it fruit or vegetable) they receive the goods to be processed directly from the harvesting fields and are therefore fed with indiscriminate masses of mutually heterogeneous products.

Along the lines, therefore, there are stations capable of selecting automatically the products as a function of the dimensions, in order to assign them to different downstream stations (which are thus fed with mutually homogeneous products) and/or package them in different packages as a function of their size.

Indeed due to the importance of this function (performed by stations that perform the desired selection mechanically or electronically), and due to the heterogeneous nature of the goods, the most modern lines have, upstream of the calibration station, an additional ("pre-calibration") station, which performs a preliminary selection of the horticultural products.

In greater detail, and with specific reference to lines dedicated to cherries, in the pre-calibration stations a stream of water that entrains with it the cherries to be selected affects a plurality of suspended cylinders, which are mutually parallel and rotate about their own axis.

The cylinders are inclined (downstream) and appropriately mutually spaced and contoured, so that a longitudinally oriented slot is formed between each pair of adjacent cylinders.

In this manner, as soon as as the stream strikes the cylinders, the water, any leaves, stems and other debris fall directly below; minimum-size cherries (i.e., the only ones which, due to their small dimensions, are able to pass through the slot) may further fall slightly further on. Vice versa, the largest cherries continue their travel, sliding along the lateral surfaces of the cylinders (which rotate indeed to facilitate advancement) until they fall downstream of said cylinders.

Thus, in addition to removing leaves and other debris, the station performs a first division of the cherries into two groups (indeed as a function of dimensions), each of which is collected in a respective tank filled with water, which is of course arranged below the cylinders and makes the respective cherries available to the actual calibration stations.

However, this constructive solution is not devoid of drawbacks.

It should in fact be noted that in known pre-calibration stations the rotation of the cylinders is entrusted to a motor that actuates a series of gears, with which respective pins which protrude coaxially from the end directed downstream of the cylinders.

This configuration forces the need to keep the cylinders at a vertical level that is significantly higher than the level at which the upper edge of the collection tanks is located.

Only in this manner the motor and the gears that are responsible for the movement of the cylinders (indeed located below the lower ends of said cylinders) can find an adequate placement without having to be themselves immersed in the water of the tanks (an obviously unacceptable condition).

However, this entails a considerable leap for the cherries, when they fall from the slot or from the lower end of the cylinders into said tanks.

Although this usually is not a problem (due to the low weight) for the smallest cherries, the excessive leap is instead a highly unwelcome drawback for larger ones (which, as shown, slide along the entire length of the cylinders and fall beyond).

Larger cherries can in fact fall onto other cherries that are floating in the tank, bruising each other or otherwise becoming damaged, causing in any case a degree of defectiveness that is now unacceptable.

The aim of the present invention is to solve the problems described above, by providing an apparatus that allows optimum preliminary selection (pre-calibration) of cherries or other horticultural products.

Within this aim, an object of the invention is to provide an apparatus that is capable of performing the preliminary selection (pre-calibration) without damaging or deteriorating the treated horticultural products, be they cherries or others.

Another object of the invention is to provide an apparatus that is capable of performing the preliminary selection (pre-calibration) without forcing leaps of excessive extent on the treated horticultural products, be they cherries or others.

Another object of the invention is to provide an apparatus that ensures high reliability in operation.

Another object of the invention is to provide an apparatus that can be obtained easily starting from commonly commercially available elements and materials.

Another object of the invention is to provide an apparatus that has low costs and is safe in application.

This aim, as well as these and other objects that will become better apparent hereinafter, are achieved by an apparatus for selecting horticultural products in accordance with claim 1, comprising an intake section for horticultural products, which leads to at least one passage lane defined by a pair of mutually close stems that are supported rotatably by a respective support and movement assembly and are interposed longitudinally between said intake section and a discharge section, between said at least one pair of stems, kept inclined downward from said intake section to said discharge section, there being a longitudinal slot that can be crossed exclusively by debris and horticultural products having dimensions that are smaller than the width of said slot, characterized in that said assembly comprises a drive unit which meshes, optionally indirectly, with a first end portion of each one of said stems that is proximate to said intake section, and respective elements for the free support of a second end portion of each one of said stems that is proximate to said discharge section.

Further characteristics and advantages of the invention will become better apparent from the description of a preferred but not exclusive embodiment of the apparatus according to the invention, illustrated by way of nonlimiting example in the accompanying drawings, wherein:
Figure 1 is a top view of an apparatus according to the invention;

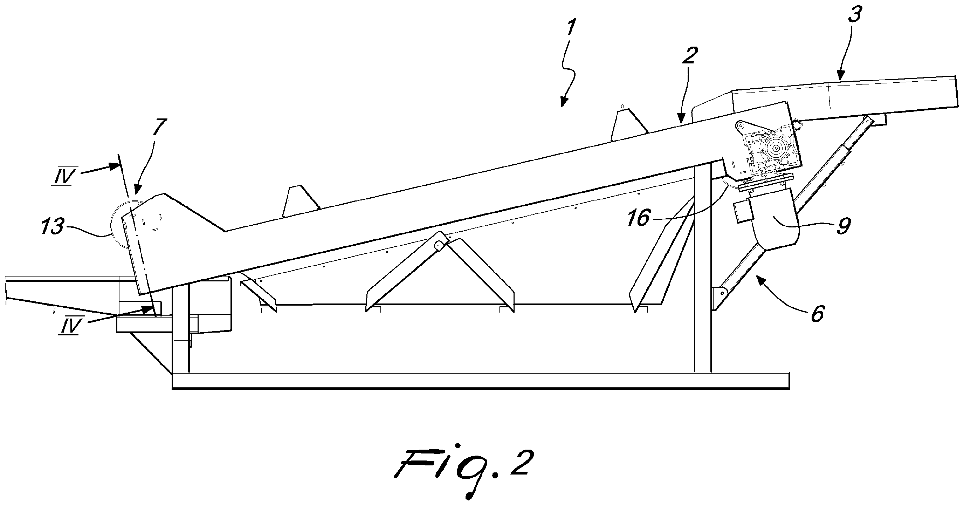

Figure 2 is a side elevation view of the apparatus according to the invention;
Figure 3 is a sectional view of Figure 1, taken along the line III-III;
Figure 4 is a sectional view of Figure 2, taken along the line IV-IV.

With particular reference to the cited figures, the reference numeral 1 generally designates an apparatus for selecting horticultural products, which comprises first of all an intake section 2 for said horticultural products.

It is specified that the apparatus 1 can find application in any point of lines for the processing of horticultural products (of any type), where indeed the need arises to divide them into at least two subgroups (indeed select them) as a function of their dimensions.

It should be noted, further, that the transport of the horticultural products along the path defined by the apparatus 1 can be entrusted exclusively to the force of gravity or be obtained in other manners, but in the preferred application these products are propelled by a fluid under pressure (preferably water) (which therefore cooperates with the force of gravity).

In the accompanying figures, for example, a constructive solution is proposed in which at the intake section 2 the products are in practice delivered from a distribution and conveyance tank 3 (which divides the horticultural products on a plurality of uniform rows indeed to facilitate the correct operation of the apparatus 1).

It is specified further right now that in the preferred application, to which reference shall be made often in the continuation of the present description, the horticultural products treated (selected) by the apparatus 1 are cherries, but it is useful to specify again that this does not exclude the use of said apparatus 1 in relation to different types of fruit or vegetable.

In any case, the intake section 2 leads in an upward region to at least one passage lane 4 that is defined by a pair of mutually close stems 5a, 5b.

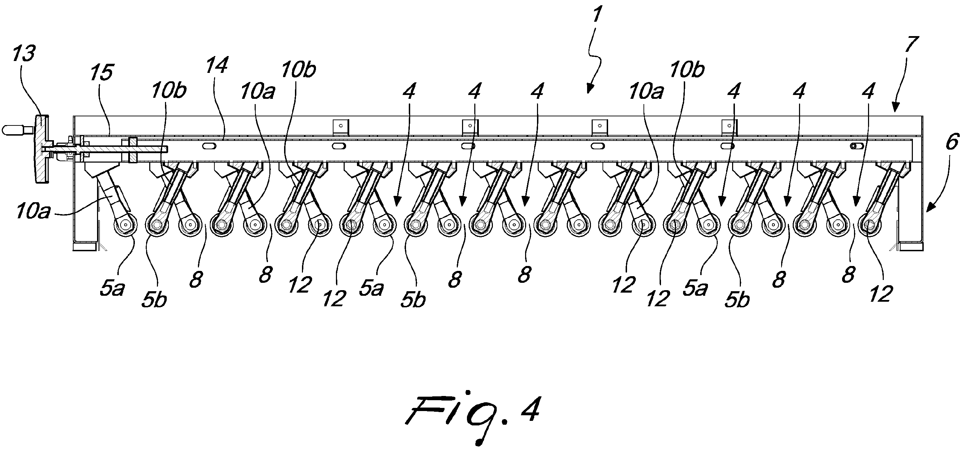

The stems 5a, 5b are supported rotatably by a respective support and movement assembly 6 and are interposed longitudinally between the intake section 2 and a discharge section 7 (which substantially corresponds to the section of Figure 4).

Furthermore, between the pair of stems 5a, 5b, which are kept inclined downward from the intake section 2 to the discharge section 7 (therefore from upstream to downstream), there is a longitudinal slot 8 that can be crossed only by debris and horticultural products that have dimensions that are smaller than the width of such slot 8.

Vice versa, therefore, larger cherries are forced to travel along the entire lane 4 (or in any case to continue until they reach a point of the slot 8 that has a greater width) and therefore fall further downstream.

It should be noted that the components and the operation outlined above therefore allow to perform the desired selection: as soon as the stream of water and cherries strikes the stems 5a, 5b, the leaves, stems and other small debris fall immediately through the slot 8; the smaller cherries also fall with them (or directly after) and thus fall, for example, into a first collection tank.

On the other hand, the larger cherries continue their travel and fall further downstream into a second collection tank.

From the two collection tanks the cherries can then be picked up by different devices and/or be intended for different treatments, as a function of the different dimensions.

The apparatus 1 in practice preferably performs a pre-calibration function, understood indeed as a first preliminary division of a chaotic mass of cherries into two at least partially homogeneous subgroups.

According to the invention, the assembly 6 comprises a drive unit 9 which meshes, optionally indirectly (i.e., by means of respective transmission elements), with a first end portion of each stem 5a, 5b proximate to the intake section 2.

Furthermore, the assembly 6 comprises respective elements 10a, 10b for the free support of a second end portion of each stem 5a, 5b directed toward the discharge section 7.

It should be noted that the methods for movement and support of the stems 5a, 5b indicated above allow right now to achieve the intended aim: the (bulky) elements that are responsible for moving the stems 5a, 5b are in fact now arranged proximate to the intake section 2, at which the stems 5a, 5b (with their first end portion, to which indeed said elements are connected) have a higher vertical elevation.

Vice versa, at the second end portion, arranged at a lower vertical height, the stems 5a, 5b are simply supported by the elements 10a, 10b having a reduced space occupation and besides, as will become apparent hereinafter, they can be arranged above said stems 5a, 5b.

Therefore, in the apparatus 1 according to the invention a free space of considerable extent is not required below the lower flap of the stems 5a, 5b, which can thus be kept proximate to the underlying collection tanks, thus effectively reducing the leap that is imposed on the cherries and indeed achieving the intended aim.

In particular, the apparatus 1 comprises a plurality of lanes 4, which are defined by respective pairs of adjacent stems 5a, 5b, which are supported rotatably by the assembly 6 and are interposed longitudinally between the sections 2, 7 (from upstream to downstream). As can be deduced also from the accompanying figures, respective longitudinal slots 8 are therefore defined between pairs of adjacent stems 5a, 5b.

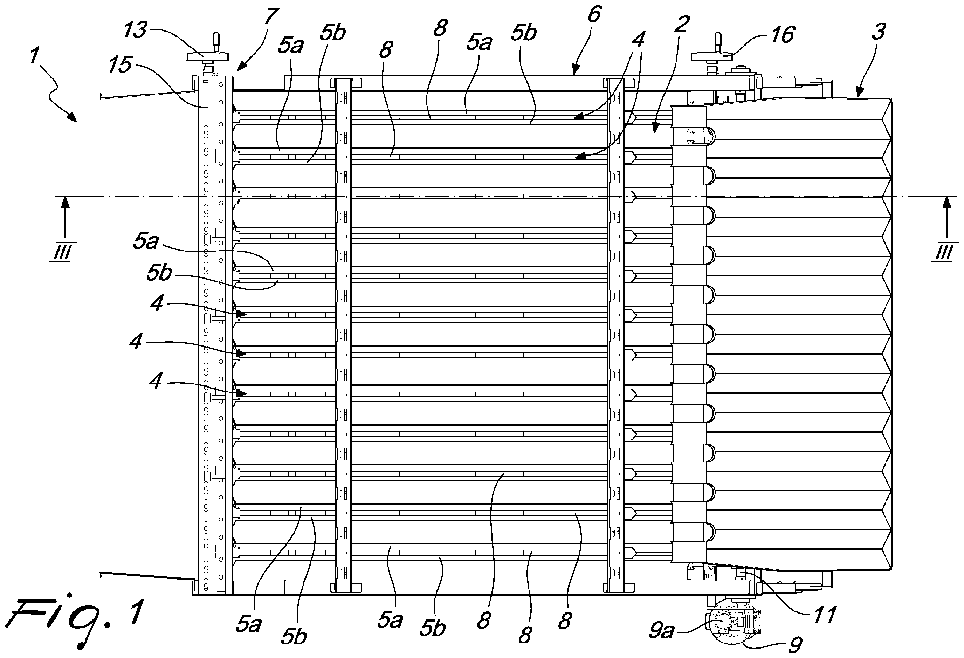

As clearly shown by Figures 1 and 4, in the configuration that is proposed (by way of nonlimiting example) each stem designated by 5a is alternated with a respective stem, designated by 5b, and for an observer located downstream (Figure 4) the lanes 4 and the slots 8 are defined exclusively to the right of each stem 5a (and correspondingly to the left of each stem 5b), while the space directly to the left of each stem 5a is unused.

It is useful to specify again in any case that use in different manner of the various interspaces defined between the stems 5a, 5b as a function of the specific requirement is not excluded.

In the preferred embodiment, shown in the accompanying figures by way of example of the invention, an output shaft 9a of the drive unit 9 (for example an electric motor) is connected, optionally by means of respective gears, to a motion transmission shaft 11.

The transmission shaft 11 in turn is coupled, optionally indirectly (therefore optionally by means of additional gears), to each first end portion of the stems 5a, 5b, so as to indeed give them the desired rotary motion about their own axis (which is required to facilitate the sliding of the largest cherries along the respective lateral surfaces and thus make them fall downstream).

In accordance with the invention, each element 10a, 10b for free support is constituted substantially by a respective arm, which is indeed adapted to support the respective stem 5a, 5b from above.

As clearly shown for example by Figure 4, each arm is in fact anchored in an upward region to the support and movement assembly 6 and is provided in a downward region with a seat 12 for rotary accommodation for the respective second end portion of a corresponding stem 5a, 5b.

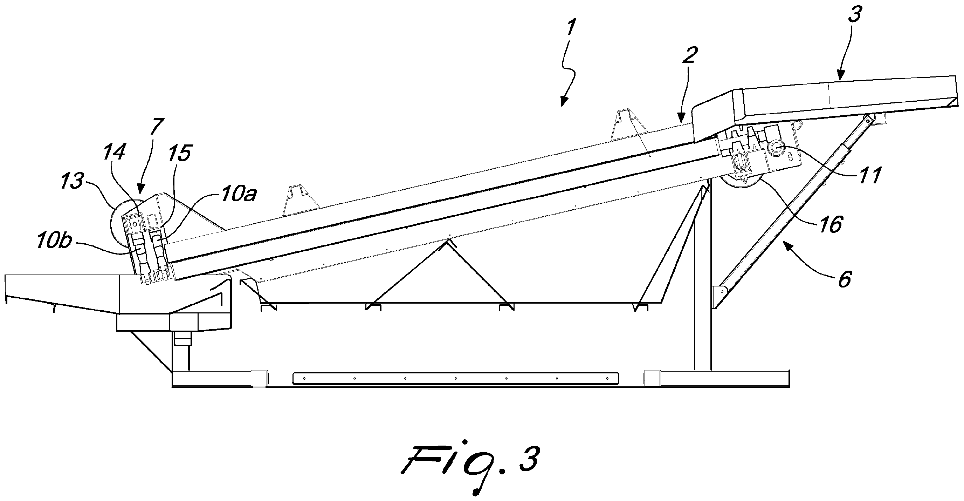

Furthermore, in accordance with the invention, each arm (each element 10a, 10b) is inclined with respect to the vertical: as can be deduced also from Figure 3, with this configuration each arm remains spaced from the respective (end) portion of the passage lane 4, which in practice corresponds substantially to the region of space that is interposed between the corresponding lateral surfaces of the second end portions of the stems 5a, 5b.

In this manner the danger that the cherries in transit might strike the arms, becoming damaged and/or diverting from the preset trajectory, is avoided.

The apparatus 1 according to the invention comprises means for the adjustment of the position of at least one stem 5b, so as to be able to vary selectively the shape and/or width of the respective slot 8.

It should be noted that this increases significantly the versatility of the apparatus 1 according to the invention, since by acting on the adjustment means (for example in the manners that will be described hereinafter) it is possible to change the dimensional limit (the width of the slots 8) that discriminates between the cherries that are able to pass through said slots 8 and the ones that instead travel along the entire lane 4. Besides, by way of the adjustment means and thanks to the possibility to vary the shape and dimensions of the slots 8 it is also possible to reconfigure such apparatus 1 according to the invention to select a different type of fruit (or other horticultural product in general) to be divided according to different dimensional criteria.

In accordance with the invention, the means comprise a first actuation unit 13 (a first knob that can be operated by the user) for actuating the transverse movement of a slider 14 that is integral with at least one supporting arm of the second end of a corresponding stem 5b.

By means of the transverse movement (i.e., substantially horizontally and at right angles to the longitudinal extension of the stems 5a, 5b) it is thus possible to change (albeit slightly) the inclination of the stems 5b and therefore achieve the consequent variation of the shape and/or width of the respective slot 8 (for example keeping the corresponding adjacent stem 5a fixed).

In particular, each pair of stems 5a, 5b that defines a respective slot 8 is composed of a first stem 5a (on the left, for an observer located downstream) and a second stem 5b (on the right for a downstream observer). The first stem 5a is therefore supported in the corresponding second end by a corresponding arm (element 10a) that is anchored in an upward region to a fixed cross-member 15 defined by the support and movement assembly 6. Vice versa, the second stem 5b is supported in the corresponding second end by a corresponding arm (element 10b) that is anchored in an upward region to the slider 14 and is guided slidingly by said cross-member 15 (or by another fixed element of the support and movement assembly 6).

It should be noted therefore that by acting exclusively on the second end portions of the stems 5b it is possible to vary the shape of the respective slot 8, increasing or decreasing the width of the upstream portion with respect to the width of the downstream portion, as a function of the specific requirements.

The means may further comprise a second actuation unit 16 (a second knob), which can be activated by a user for the transverse movement of the first end of a respective stem 5a, 5b and the consequent variation of the shape and/or width of the respective slot 8.

It should be noted first of all that the provision of apparatuses 1 according to the invention provided with adjustment means that act also on the first end portions as a function of the specific requirements is not excluded.

However, in the embodiment proposed in the accompanying figures, the adjustment means comprise both the first actuation unit 13 and the second actuation unit 16: this evidently ensures maximum versatility to the apparatus 1.

The manners in which the second actuation unit 16 adjusts the movement of the first end portions of the stems 5a, 5b may be similar to the ones described in relation to the first actuation unit 13 or may be different according to the specific requirements.

Usefully, each stem 5a, 5b has a cylindrical shape, although it is not excluded to adopt different shapes and contours, for example conical ones, to define slots 8 having different shapes.

If therefore the stems 5a, 5b have such cylindrical shape (and mutually parallel axes) they may define slots 8 that have a constant width: by imposing the same displacement to the first and second end portions (by means of the units 13, 16), it is therefore possible to vary uniformly such width along its entire longitudinal extension. Vice versa, with displacements of different extent, or by acting on just one of the units 13, 16, it is possible to shape the slots 8 differently, so that for example they widen downstream.

Operation of the apparatus according to the invention is as follows.

Upstream of the apparatus 1, the cherries are redistributed in various channels by way of the distribution and conveyance tank 3, from which therefor the cherries fall in tidy rows into the passage lanes 4, substantially at the intake section 2.

As shown, each passage lane 4 is affected, along the entire length, by a respective slot 8 that is delimited by adjacent stems 5a, 5b: debris of various kinds, optionally entrained by the water together with the cherries, can thus fall immediately through the slot 8.

The smallest cherries also fall together with the debris (or shortly thereafter), while the larger cherries advance along the lane 4 to fall further downstream, at an optional widening of the slot 8 or simply beyond the discharge section 7 and the stems 5a, 5b. The apparatus 1, in other words, performs selection by making cherries of different sizes fall automatically in different points of the line.

By way of the choice to connect the drive unit 9 to the first end portion (arranged at a higher level) of each stem 5a, 5b, and by resorting to simple supporting elements 10a, 10b for the second end portions, in particular the latter and in general the entire stems 5a, 5b can be kept proximate to the free surface of the water that fills the underlying collection tanks.

This positive effect is increased by the preferred choice of supporting from above the second portions by means of elements 10a, 10b, which in turn are fixed in an upward region to the support and movement assembly 6 (to the cross-member 15 or to the slider 14).

In this configuration the second portions of the stems 5a, 5b in fact can be kept even closer to the collection tanks, until they almost skim them, without compromising in any way the correct operation of the apparatus 1.

Moreover, a very small leap (from the slot 8 to the collection tank) is imposed on the cherries, its value being however particulary modest for larger fruits (the ones for which the risk of bruising is higher), which indeed fall proximate to the discharge section 7 (of the second end portions of the stems 5a, 5b), kept at the lowest vertical height.

The configuration obtained above therefore allows to perform the selection (calibration) without subjecting the treated horticultural products, be they cherries or others, to the risk of impacts, bruising or damage in general and therefore without deteriorating them in any way (as instead occurs with known apparatuses due to the excessive leap that is imposed).

Moreover, it is stressed that the adjustment means can provide further functionalities to the apparatus 1 according to the invention, ensuring in fact the possibility to vary at will the selection parameters (the discriminating dimensional limit for the division of the cherries into dimensionally uniform subgroups).

Finally, it is specified again that the apparatus 1 according to the invention ensures the preservation of the quality of the treated horticultural products (without causing damage or bruising) also by way of the choice to arrange at an angle (in a V-shaped configuration) the stems 5a, 5b that define the slots 8 and the lanes 4, since in this configuration they do not hinder the advancement of the cherries.

In practice it has been found that the apparatus according to the invention achieves fully the intended aim, since resorting to a support and movement assembly that comprises a drive unit that meshes with a first end portion of the stems that define the slots, proximate to the input section, and respective elements for the free support of a second end portion of such stems that is proximate to the discharge section allows to perform the optimum preliminary selection (pre-calibration) of cherries or other horticultural products.

The invention is delimited by the appended claims.

In the examples of embodiment shown, individual characteristics, given in relation to specific examples, may actually be interchanged with other different characteristics that exist in other exemplary embodiments.

In practice, the materials used, as well as the dimensions, may be any according to requirements and to the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An apparatus for selecting horticultural products, comprising an intake section (2) for horticultural products, which leads to at least one passage lane (4) defined by a pair of mutually close stems (5a, 5b) that are supported rotatably by a respective support and movement assembly (6) and are interposed longitudinally between said intake section (2) and a discharge section (7), between said at least one pair of stems (5a, 5b), kept inclined downward from said intake section (2) to said discharge section (7), there being a longitudinal slot (8) that can be crossed exclusively by debris and horticultural products having dimensions that are smaller than the width of said slot (8), said support and movement assembly (6) comprising a drive unit (9) which meshes, optionally indirectly, with a first end portion of each one of said stems (5a, 5b) that is proximate to said intake section (2), and respective elements (10a, 10b) for the free support of a second end portion of each one of said stems (5a, 5b) that is proximate to said discharge section (7), said apparatus (1) comprising means for adjusting the position of at least one of said stems (5b), in order to vary selectively the shape or width of the respective said slot (8), **characterized in that** each one of said elements (10a, 10b) for free support is constituted by an arm that is anchored in an upward region to said support and movement assembly (6) and has, in a downward region, a seat (12) for rotatable accommodation of a respective said second end portion of a corresponding said stem (5a, 5b), each one of said arms being inclined, with respect to the vertical, in order to remain spaced from the respective portion of said passage lane (4), which corresponds to the region of space that is interposed between the corresponding lateral surfaces of said second end portions of said stems (5a, 5b), said means for adjusting the position of at least one of said stems (5b), in order to vary selectively the shape or width of the respective said slot (8) comprising a first unit (13) for actuating the transverse movement of a slider (14) that is integral with at least one said arm for supporting said second end of a corresponding said stem (5b), for the consequent variation of the shape and/or width of the respective said slot (8).

2. The apparatus according to claim 1, **characterized in that** it comprises a plurality of said lanes (4), defined by respective pairs of said adjacent stems (5a, 5b), which are supported rotatably by said support and movement assembly (6) and are interposed longitudinally between said sections (2, 7), respective said longitudinal slots (8) being defined between pairs of said adjacent stems (5a, 5b).

3. The apparatus according to claim 1 or 2, **characterized in that** an output shaft (9a) of said drive unit (9) is connected, optionally by means of respective gears, to a motion transmission shaft (11) which is coupled, optionally indirectly, to each one of said first end portions of said stems (5a, 5b).

4. The apparatus according to claim 1, **characterized in that** each one of said pairs of stems (5a, 5b) that defines respective said slots (8) is composed of a first said stem (5a), which is supported in the corresponding said second end by a corresponding said arm that is anchored in an upward region to a fixed cross-member (15), which is defined by said assembly (6), and by a second said stem (5b), which is supported in the corresponding said second end by a corresponding said arm that is anchored in an upward region to said slider (14), which is guided slidingly by said cross-member (15).

5. The apparatus according to claim 1 or 4, **characterized in that** said means comprise a second unit (16) for actuating the transverse movement of said first end of a respective said stem (5a, 5b), for the consequent variation of the shape or width of the respective said slot (8).

6. The apparatus according to one or more of the preceding claims, **characterized in that** each one of said stems (5a, 5b) has a cylindrical shape.

## Patentansprüche

1. Eine Vorrichtung zur Auswahl von Gartenbauprodukten, die einen Einlassabschnitt (2) für Gartenbauprodukte umfasst, der zu mindestens einer Durchgangsstraße (4) führt, welche durch ein Paar nahe beieinanderliegender Schäfte (5a, 5b) bestimmt ist, die drehbar von einem dazugehörigen Lagerungs- und Bewegungsaufbau (6) getragen sind und in Längsrichtung zwischen dem Einlassabschnitt (2) und einem Auslassabschnitt (7) angeordnet sind, wobei sich zwischen dem mindestens einen Paar von Schäften (5a, 5b), schräg abwärts von dem Einlassabschnitt (2) zu dem Auslassabschnitt (7) gehalten, ein Längsschlitz (8) befindet, welcher ausschließlich von Schmutz und Gartenbauprodukten durchquert werden kann, die kleinere Abmessungen haben als die Breite des Schlitzes (8), wobei der Lagerungs- und Bewegungsaufbau (6) eine Antriebseinheit (9) umfasst, welche, wahlweise indirekt, in einen ersten Endabschnitt jedes der Schäfte (5a, 5b) eingreift, der nahe dem Einlassabschnitt (2) liegt und entsprechende Elemente (10a, 10b) für die freie Lagerung eines zweiten Endabschnitts jedes der Schäfte (5a, 5b), der nahe an dem Auslassabschnitt (7) liegt, wobei die Vorrichtung (1) Mittel umfasst, um die Position mindestens eines der Schäfte (5b) anzupassen, um die Form oder Größe des jeweiligen Schlitzes (8) wahlweise zu verändern,
**dadurch gekennzeichnet, dass** jedes der Elemente (10a, 10b) zur freien Lagerung aus einem Arm besteht, der in einem oberen Bereich an dem Lagerungs- und Bewegungsaufbau (6) verankert ist und in einem unteren Bereich einen Sitz (12) zur drehbaren Aufnahme des entsprechenden zweiten Endabschnitts des entsprechenden Schafts (5a, 5b) hat, wobei jeder der Arme mit Bezug auf die Vertikale geneigt ist, um von dem entsprechenden Abschnitt der Durchgangsstraße (4) beabstandet zu bleiben, welcher dem Abschnitt des Raums entspricht, der zwischen den entsprechenden Seitenflächen der zweiten Endabschnitte der Schäfte (5a, 5b) angeordnet ist, wobei die Mittel zur Anpassung der Position mindestens eines der Schäfte (5b) um die Form oder Breite des entsprechenden Schlitzes (8) wahlweise zu verändern, eine erste Einheit (13) umfassen, um die transversale Bewegung eines Schiebers (14) auszulösen, welcher integral mit dem mindestens einen Arm zum Tragen des zweiten Endes des entsprechenden Schafts (5b) ist, zur sich daraus ergebenden Veränderung der Form und/oder Breite des entsprechenden Schlitzes (8).

2. Die Vorrichtung gemäß Anspruch 1, **dadurch gekennzeichnet, dass** sie eine Vielzahl der Straßen (4) umfasst, die durch entsprechende Paare der benachbarten Schäfte (5a, 5b) bestimmt sind, welche drehbar von dem Lagerungs- und Bewegungsaufbau (6) getragen und in Längsrichtung zwischen den Abschnitten (2, 7) angeordnet sind, wobei die entsprechenden Längsschlitze (8) zwischen Paaren der benachbarten Schäfte (5a, 5b) bestimmt sind.

3. Die Vorrichtung gemäß Anspruch 1 oder 2, **dadurch gekennzeichnet, dass** eine Antriebswelle (9a) der Antriebseinheit (9), wahlweise durch entsprechende Getriebe, mit einer Bewegungs-Transmissionswelle (11) verbunden ist, welche, wahlweise indirekt, mit jedem der ersten Endabschnitte der Schäfte (5a, 5b) gekoppelt ist.

4. Die Vorrichtung gemäß Anspruch 1, **dadurch gekennzeichnet, dass** jedes der Paare von Schäften (5a, 5b), dass die entsprechenden Schlitze (8) bestimmt, aus dem ersten Schaft (5a) besteht, dass in dem entsprechenden zweiten Ende durch den entsprechenden Arm gelagert ist, welcher in einem oberen Bereich an einem festen Querträger (15) verankert ist, der durch den Aufbau (6) bestimmt ist und aus dem zweiten Schaft (5b), welcher in dem entsprechenden zweiten Ende durch den entsprechenden Arm gelagert ist, der in einem oberen Bereich an dem Schieber (14) verankert ist, der verschiebbar von dem Querträger (15) geführt ist.

5. Die Vorrichtung gemäß Anspruch 1 oder 4, **dadurch gekennzeichnet, dass** die Mittel eine zweite Einheit (16) zum Antreiben der transversalen Bewegung des ersten Endes des entsprechenden Schafts (5a, 5b) umfassen, zur daraus folgenden Veränderung der Form oder Breite des entsprechenden Schlitzes (8).

6. Die Vorrichtung gemäß einem oder mehreren der obigen Ansprüche, **dadurch gekennzeichnet, dass** jeder der Schäfte (5a, 5b) eine zylindrische Form hat.

## Revendications

1. Appareil de sélection de produits horticoles, comportant une section d'admission (2) pour des produits horticoles, qui conduit à au moins une voie de passage (4) définie par une paire de tiges mutuellement proches (5a, 5b) qui sont supportées en rotation par un ensemble de support et de mouvement (6) respectif et sont intercalées longitudinalement entre ladite section d'admission (2) et une section de décharge (7), entre ladite au moins une paire de tiges (5a, 5b), maintenues inclinées vers le bas de ladite section d'admission (2) à ladite section de décharge (7), une fente longitudinale (8) étant agencée qui peut être croisée exclusivement par des débris et des produits horticoles ayant des dimensions qui sont plus petites que la largeur de ladite fente (8), ledit ensemble de support et de mouvement (6) comportant une unité d'entraînement (9) qui s'engrène, facultativement indirectement, avec une première partie d'extrémité de chacune desdites tiges (5a, 5b) qui est proche de ladite section d'admission (2), et des éléments (10a, 10b) respectifs pour le libre support d'une seconde partie d'extrémité de chacune desdites tiges (5a, 5b) qui est proche de ladite section de décharge (7), ledit appareil (1) comportant des moyens pour régler la position d'au moins une desdites tiges (5b), afin de faire varier sélectivement la forme ou la largeur de ladite fente (8) respective,
**caractérisé en ce que** chacun desdits éléments (10a, 10b) de libre support est constitué d'un bras qui est ancré dans une zone vers le haut audit ensemble de support et de mouvement (6) et a, dans une zone vers le bas, un appui (12) pour une réception rotative d'une dite seconde partie d'extrémité respective d'une dite tige (5a, 5b) correspondante, chacun desdits bras étant incliné, par rapport à la verticale, afin de rester espacé de la partie respective de ladite voie de passage (4), qui correspond à la zone d'espace qui est intercalée entre les surfaces latérales correspondantes desdites secondes parties d'extrémité desdites tiges (5a, 5b), lesdits moyens pour régler la position d'au moins une desdites tiges (5b), afin de faire varier sélectivement la forme ou la largeur de ladite fente (8) respective comportant une première unité (13) pour déclencher le mouvement transversal d'un coulisseau (14) qui est solidaire d'au moins un dit bras pour supporter ladite seconde extrémité d'une dite tige (5b) correspondante, pour la variation conséquente de la forme et/ou de la largeur de ladite fente (8) respective.

2. Appareil selon la revendication 1, **caractérisé en ce qu'**il comporte une pluralité desdites lignes (4), définies par des paires respectives desdites tiges (5a, 5b) adjacentes, qui sont supportées en rotation par ledit ensemble de support et de mouvement (6) et sont intercalées longitudinalement entre lesdites sections (2, 7), lesdites fentes longitudinales (8) respectives étant définies entre des paires desdites tiges adjacentes (5a, 5b) .

3. Appareil selon la revendication 1 ou 2, **caractérisé en ce qu'**un arbre de sortie (9a) de ladite unité d'entraînement (9) est relié, facultativement au moyen d'engrenages respectifs, à un arbre de transmission de mouvement (11) qui est accouplé, facultativement indirectement, à chacune desdites premières parties d'extrémité desdites tiges (5a, 5b).

4. Appareil selon la revendication 1, **caractérisé en ce que** chaque tige desdites paires de tiges (5a, 5b) qui définit lesdites fentes (8) respectives est composée d'une dite première tige (5a), qui est supportée dans la dite seconde extrémité correspondante par un dit bras correspondant qui est ancré dans une zone vers le haut à une traverse fixe (15), qui est définie par ledit ensemble (6), et par une dite seconde tige (5b), qui est supportée dans la dite seconde extrémité correspondante par un dit bras correspondant qui est ancré dans une zone vers le haut audit coulisseau (14), qui est guidé de manière coulissante par ladite traverse (15).

5. Appareil selon la revendication 1 ou 4, **caractérisé en ce que** lesdits moyens comportent une seconde unité (16) pour déclencher le mouvement transversal de ladite première extrémité d'une dite tige (5a, 5b) respective, pour la variation conséquente de la forme ou de la largeur de ladite fente (8) respective.

6. Appareil selon une ou plusieurs des revendications précédentes, **caractérisé en ce que** chacune desdites tiges (5a, 5b) a une forme cylindrique.
